# EUROPEAN PATENT APPLICATION

(11) **EP 1 443 698 A2**
(43) Date of publication of application: **04.08.2004**
(21) Application number: 03300253.6
(22) Date of filing: 09.12.2003
(51) Int. Cl.: H04L 7/00

(54) **System and method for detection of delineation of data units in a communication element**

(30) Priority: 13.12.2002 US 318049
(71) Applicant: Alcatel Canada Inc., Kanata, Ontario K2K 2E6 (CA)
(72) Inventor: Liu, Bo, Kanata Ontario K2K 3E5 (CA); Sleigh, Todd Richard, Kanata Ontario K2K 2V2 (CA); Rao, Srikantha B.G., Stittsville Ontario K2S 1E1 (CA); Darbha, Srikrishna, Kanata Ontario K2K 2X7 (CA)
(74) Representative: Feray, Valérie

(57) **Abstract**

A method and device for detecting delineation of data units found in a stream of data parts is provided. Each data unit of the stream of data parts has a fixed number of data parts. The stream of data parts has an instance of a marker inserted therein periodically. Each instance of the marker is inserted between consecutive sets of at least one data part. Each set has a fixed number of data parts. The method includes the steps of detecting a first instance of the marker in the stream, searching for another instance of the marker at an expected location in the stream and based on whether the another instance of the marker is detected at the expected location, declaring a delineation state for the data units, the delineation state indicating whether boundaries between the data units in the stream are detected.

## Description

### FIELD OF THE INVENTION

The invention relates to a system and method for detection of delineation of data units in a stream of data for a communication element.

### BACKGROUND OF INVENTION

In a communication device, data is processed by a series of communication elements. Often, data will be transmitted as a serial stream between communication elements and then will be converted to a parallel format for internal processing by the receiving communication element.

A deserializer at the receiving communication element converts the serial data stream into parallel data. The receiving communication element needs to determine the data unit boundaries that were lost on serialization and transmission of the data.

When data units are ATM cells, boundaries of ATM cells may be detected by examining the cell stream for a header error check (HEC) byte which is located in the header of the cell. A known method performs a bit-wise analysis of the data stream to identify a byte as a HEC byte by comparing the value of the byte with an expected HEC calculated for the previous four bytes. If the byte matches the expected HEC, the method has identified a boundary between cells.

However, idle cells may cause false matches between the last byte and the previous four bytes in serial data stream when the last byte is not the HEC byte. This may cause the receiving communication element to declare cell delineation falsely. As the receiving communication element has falsely identified the location of the boundaries of the cells, the receiving communication element reads an incorrect location for addressing information contained in the header. The receiving communication element therefore misroutes the cell since the correct addressing information was not used and any user data contained in the cell is lost.

Also, for increased confidence in the identification of the boundary, it may be necessary to scan several more cells, sometimes several hundred cells, before declaring cell delineation. Still, in prior art systems, the possibility of falsely declaring cell delineation due to aliasing exists. In some applications, in the case of ATM idle cells, if false lock is set on a stream of idle cells, it will be maintained until data cells are received and a loss of cell delineation is declared.

There is a need for a system and method for delineating between data units in a data stream that will eliminate the possibility of false delineation in the absence of bit errors and ensure data unit delineation can be achieved in a small number of data units.

### SUMMARY OF INVENTION

In a first aspect, a method of detecting delineation of data units found in a stream of data parts is provided. Each data unit of the stream of data parts has a fixed number of data parts. The stream of data parts has an instance of a marker inserted therein periodically. Each instance of the marker is inserted between consecutive sets of at least one data part. Each set has a fixe d number of data parts. The method includes the steps of detecting a first instance of the marker in the stream, searching for another instance of the marker at an expected location in the stream and based on whether the another instance of the marker is detected at the expected location, declaring a delineation state for the data units, the delineation state indicating whether boundaries between the data units in the stream are detected.

The other instance of the marker may be sought at a next expected location of the marker and each instance of the marker is inserted at a boundary between two of the data units.

The marker, absent an error in the stream, may not occur in the stream of data parts except where inserted.

The method may further include iteratively repeating the step of searching for another instance of the marker at an expected location in the stream, searching further downstream in the stream at the next expected location of the marker.

If the delineation state indicates that the boundaries between the data units have not been detected prior to performing the step of declaring a delineation state for the data units and the another instance of the marker has been detected for a first pre-determined number of consecutive iterations of the step of searching for another instance of the marker, the step of declaring a delineation state for the data units may declare a delineation state indicating that the boundaries of the data units are detected.

If the delineation state indicates that the boundaries between the data units have been detected prior to performing the step of declaring a delineation state for the data units and the another instance of the marker has not been detected for a second pre-determined number of consecutive iterations of the step of searching for another instance of the marker, the step of declaring a delineation state for the data units may declare a delineation state indicating that the boundaries of the data units are not detected.

The data units may be cells and the data parts may be bytes.

The bytes of the stream may be encoded as 10-bit characters using 8b/10b encoding prior to transmission of the stream.

The marker may include a control character with comma properties.

The stream may be transmitted as a serial stream of bits and the stream of encoded bytes may be a parallel stream of encoded bytes. The method may further include the step of aligning the serial stream of bits into the parallel stream of encoded bytes using the control character with comma properties prior to the step of detecting a first instance of the marker in the stream.

The control character with comma properties may be a K28.5 control character.

The marker may include two K28.5 control characters.

The method may further include the step of decoding the parallel stream of encoded bytes into a stream of decoded 8-bit bytes prior to the step of detecting a first instance of the marker in the stream and following the step of aligning the serial stream of bits into the parallel stream of encoded bytes and, upon detection of a control character in the parallel stream of encoded bytes, indicating location of the control character in the stream of decoded bytes.

The step of decoding the parallel stream of encoded bytes into a stream of decoded 8-bit bytes indicates in the stream of decoded bytes identity of the control character detected.

Each set of the at least one cell may include four cells.

The first pre-defined number may be three and the second pre-defined number may be three.

In a second aspect, a device for detecting delineation of data units found in a stream of data parts is provided. Each data unit of the stream of data parts having a fixed number of data parts. The stream of data parts has an instance of a marker inserted therein periodically. Each instance of the marker is inserted between consecutive sets of at least one data part. Each set has a fixed number of data parts. The device includes a marker detection unit searching for a first instance of the marker in the stream and searching for another instance of the marker at an expected location in the stream and a delineation unit communicating with the marker detection unit, the delineation unit declaring a delineation state for the data units based on whether the marker detection unit detects the another instance of the marker at the expected location, the delineation state indicating whether boundaries between the data units in the stream are detected.

In a third aspect, a method of detecting delineation of cells found in a stream of bytes is provided. Each cell of the stream of bytes has a fixed number of bytes. The stream of bytes has an instance of a marker of at least one byte inserted therein periodically. The method includes the steps of detecting an instance of the marker in the stream and based on whether the instance of the marker is detected at an expected location in the stream, declaring a delineation state for the cells, the delineation state indicating whether boundaries between the cells in the stream are detected.

In a fourth aspect, a data stream for transmission to a network element is provided. The data stream includes a plurality of data parts, a plurality of data units, each data unit including a fixed number of at least one data part of the plurality of data parts and a plurality of instances of a marker. Each instance of the marker in the data stream separates two consecutive sets of at least one data part, each set having a fixed number of data parts. The instances of the marker are used to declare a delineation state of the data units at the network element, the delineation state indicating whether boundaries between the data units in the stream are detected at the network element.

In a fifth aspect, a method of delineating data units in a stream of data parts is provided. Each data unit of the stream of data parts has a fixed number of data parts. The method includes the steps of inserting a first marker in the stream at a boundary between two consecutive data parts of the stream of data parts, inserting a second marker in the stream following a length of a set of at least one data part, the set having a fixed number of data parts, and the first marker and the second marker are used to identify boundaries between the data units.

In other aspects of the invention, various combinations and subset of the above aspects are provided.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):
- Figure 1: is a block diagram of components of a prior art system of determining cell delineation;
- Figure 2: is a block diagram of a parallel data stream transmitted between components in the system of Figure 1;
- Figure 3: is a block diagram of a serial data stream transmitted between components in the system of Figure 1;
- Figure 4: is a block diagram of elements of an ATM cell;
- Figure 5: is a block diagram of components of a system of an embodiment of the invention;
- Figure 6: is a block diagram of a parallel data stream transmitted between components in the system of Figure 5;
- Figure 7: is a block diagram of a serial data stream transmitted between components in the system of Figure 5;
- Figure 8: is a block diagram of a byte-aligned parallel data stream transmitted between components in the system of Figure 5;
- Figure 9: is a block diagram of the components of the system of Figure 5 illustrated in greater detail;
- Figure 10: is a block diagram of the cell delineation module of the system of Figure 9; and
- Figure 11: is a state diagram of the cell delineation state machine implemented by the delineation unit of Figure 10.

### DETAILED DESCRIPTION OF THE EMBODIMENTS

The description which follows, and the embodiments described therein, are provided by way of illustration of an example, or examples, of particular embodiments of the principles of the present invention. These examples are provided for the purposes of explanation, and not limitation, of those principles and of the invention. In the description which follows, like parts are marked throughout the specification and the drawings with the same respective reference numerals.

Briefly, a system and method of an embodiment uses a synchronization marker inserted periodically into a data stream to declare delineation between data units in the data stream. Receiving communication element searches for the marker in the data stream and, upon locating it in the data stream, the receiving communication element can identify boundaries of units in the stream.

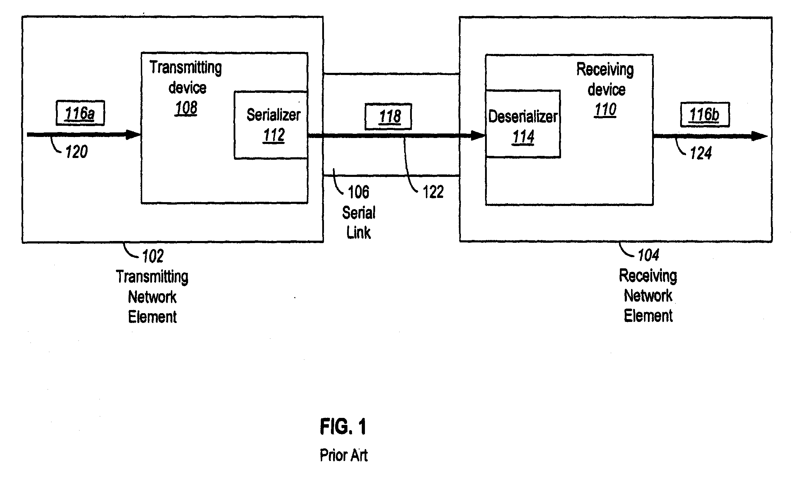

First, a prior art system and method are described followed by an example using the method of the prior art. Referring to Figure 1, a typical communication arrangement for parallel data is shown comprising a transmitting communication element 102 and a receiving communication element 104 as known in the prior art. Transmitting communication element 102 is coupled to receiving communication element 104 by serial link 106. Transmitting communication element 102 includes transmitting device 108 and receiving communication element 104 includes receiving device 110. Transmitting device 108 includes serializer 112 and receiving device 110 includes deserializer 114. Data from parallel data stream 116a enters transmitting device 108. The data is then converted to a serial format in serial data stream 118 which is then transmitted over serial link 106. Next, the data is received by receiving device 110 of receiving communication element 104 which transforms the data back into a parallel format. Data from receiving device 110 exits in parallel data stream 116b. It will be appreciated that receiving communication element 104 may also transmit data to transmitting communication element 102. However, for simplicity, only one transmission direction is shown.

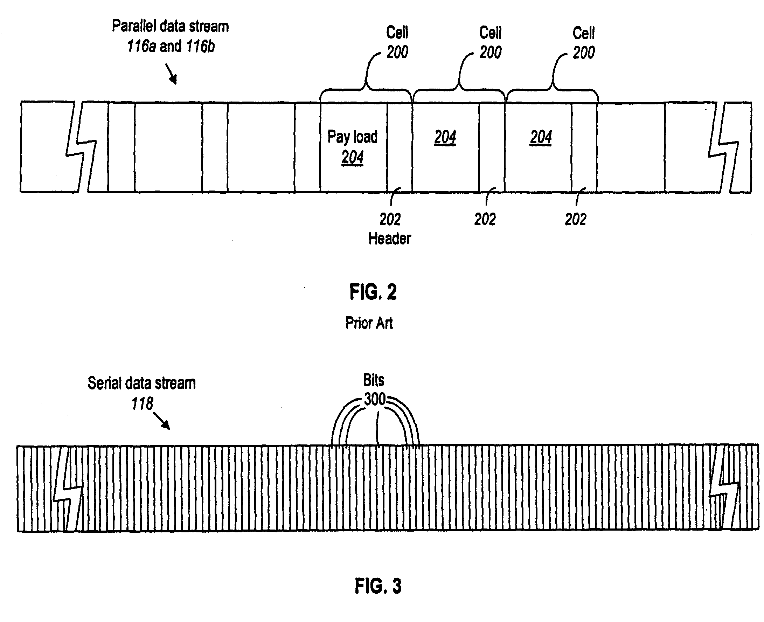

Figure 2 illustrates parallel data streams 116a and 116b in greater detail. Both parallel data streams 116a and 116b of the prior art comprise fixed length data units 200. Each unit 200 is further subdivided into parallel parts (not shown in Figure 2). Each part is further divided into bits (not shown in Figure 2). Each unit 200 has a header 202 and a payload 204. Payload 204 carries user data. Header 202 includes addressing information required for transmitting user data of unit 200 to the appropriate destination.

Figure 3 illustrates serial data stream 118 in greater detail. Serial data stream 118 carries bits 300.

Referring again to Figure 1, transmitting communication element 102 processes units 200, the bits 300 of each part are received in parallel at various components of transmitting communication element 102. Prior to transmitting data from transmitting communication element 102 over serial link 106, transmitting communication element 102 converts parallel data into serial data. Accordingly, transmitting communication element 102 sends parallel data stream 116a containing the parallel data to transmitting device 108, indicated by arrow 120, where serializer 112 converts the parallel bits 300 of parts of units 200 into a stream of bits 300. Transmitting device 108 then transmits bits 300 one at a time over serial link 106, indicated by arrow 122. Serial data stream 118 comprises this stream of transmitted bits 300. There is no separate signal to indicate the byte boundary and unit boundary in serial data stream 118.

Receiving communication element 104 processes units 200 of parallel data stream 116b, the bits 300 of which are received in parallel at various components of receiving communication element 104. Accordingly, receiving communication element 104 sends serial data stream 118 received on serial link 106 to receiving device 110 prior to processing the data contained. Deserializer 114 at receiving device 110 converts serial data stream 118 into parallel data. Receiving device 110 detects the boundaries that were lost on transmission to delineate bits 300 into parallel parts of units 200. Receiving communication element 104 then further detects the boundaries of units 200 to delineate the received parts into units 200.

Prior to achieving delineation, receiving communication element 104 cannot determine which part of serial data stream 118 received contains header 202 of any given unit 200. Thus, receiving communication element 104 cannot properly route arriving units 200. When receiving device 110 declares that delineation between units 200 has been achieved, receiving communication element 104 can route and process units 200 accordingly. Receiving device 110 then sends the parallel data to other components of receiving communication element 104, indicated by arrow 124, which may then process the bits 300 of units 200 in parallel.

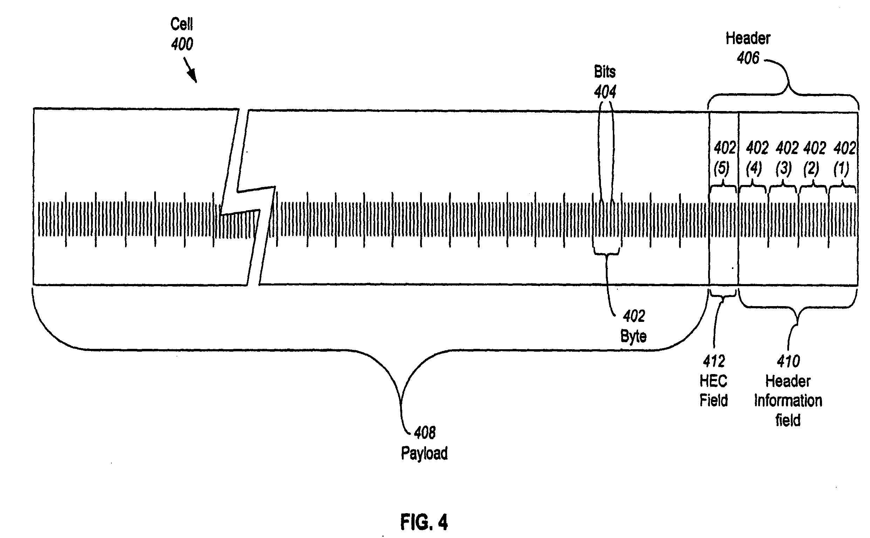

In an ATM network, units 200 are ATM cells and serial data stream 118 and parallel data stream 116 are binary data streams. Figure 4 illustrates a cell 400 in greater detail. A typical ATM cell, cell 400, comprises 53 bytes 402, each byte 402 having 8 bits 404. It will be appreciated that ATM cells may be larger than 53 bytes within a system the additional bytes above 53 for uses such as carrying additional header information for routing within the system. The method of the prior art and the embodiment are described as using ATM cells 53 bytes in length. It will be appreciated that these methods may be easily adjusted to use cells having a different length. Of the 53 bytes 402 in cell 400, 5 bytes 402 comprise header 406 and 48 bytes 402 comprise payload 408. Header 406 includes a header information field 410 including addressing information and other administrative data in the first four bytes 402(1)-(4) and a header error check (HEC) field 412 in the fifth byte 402(5). HEC field 412 is populated with a check byte that is generated, as is known in the art, based on the data contained in header information field 410. A typical polynomial used to generate the check byte for HEC testing is x⁸+x²+x+1 requiring eight (8) bits to store the binary number representing the check byte remainder polynomial. From time to time a new check byte remainder polynomial is calculated over the contents of header information field 410 and its binary representation is compared with the contents of HEC field 412. Differences between the binary representation of the remainder polynomial calculated and the contents of HEC field 412 identify HEC errors. HEC errors indicate potential errors in addressing information within header 406 and, as a result, cells 400 with HEC errors are generally discarded.

A prior art method of delineating cells 400 received at receiving communication element 104 uses the contents of HEC field 412. In carrying out this prior art method, receiving device 110 reads bits 404 from serial data stream 118. For each bit 404, a HEC calculation is performed over the 32 bits 404 (four bytes 402) received at receiving device 110 prior to the last eight-bits 404 (one byte 402) received. If the binary representation of the calculated remainder polynomial for the 32 bits 404 (four bytes 402) matches that contained in the eight-bits 404, the eight-bits 404 is assumed to be the HEC field 412 for a cell 400. If the binary representation of the calculated remainder polynomial does not match that contained in the eight-bits 404, the receiving device 110 continues to search for a match bit-by-bit.

If receiving device 110 finds a match between the binary representation of the remainder polynomial and the last eight-bits 404 just receive d, depending on the method used, it can either immediately declare that it has cell delineation or it can continue to perform HEC calculations based on the expected location in serial data stream 118 for the next HEC field 412, incrementing a counter for each HEC found until reaching a threshold. Receiving device 110 aligns serial data stream 118 so that the last eight bits 404 where the match occurred is the fifth byte 402, i.e. the position of HEC field 412. Receiving device 110 then finds the first byte 402 of the next cell 400 beginning 49 bytes 402 after HEC field 412. Different prior art implementations may use different thresholds for the value of the match counter to reach before declaring cell delineation. Some examples are 6 consecutive matches and 100 consecutive matches.

The method described above uses a similar technique for declaring loss of cell delineation. After declaring cell delineation, receiving device 110 continues to search serial stream 118 and perform the same calculation and comparison every 424 bits 404 (53 bytes 402). If receiving device 110 fails to find a match between the binary representation of the remainder polynomial and the last eight bits 404 just received, depending on the method used, it can either immediately declare that it has lost cell delineation or it can continue to perform HEC calculations based on the expected place in serial data stream 118 for the next HEC field 412 incrementing another counter for each HEC not found until reaching another threshold. Once loss of delineation is declared, receiving device 110 begins again to search serial stream 118 bit-by-bit. As with the first threshold for matches to declare cell delineation, different prior art implementations may use different thresholds for the non-match counter to reach before declaring loss of cell delineation.

Using the above described method, cells 400 may occasionally provide repeated matches between the binary representation of the remainder polynomial calculated over 32 bits 404 (four bytes 402) and the last received eight-bits 404 (one byte 402) when the eight-bits 404 do not correspond to the position of HEC field 412 in serial data stream 118. Such repeated matches may cause receiving device 110 to falsely declare cell delineation. As receiving device 110 has falsely identified the location of the boundaries of cells 400, receiving communication element 104 reads an incorrect location for addressing information contained in header 406. Receiving communication element 104 therefore misroutes the cell 400 since the correct addressing information was not used and any user data contained in the cell 400 is lost.

To address deficiencies as noted above, the system and method of the embodiment uses a unique synchronization marker which is generated and inserted into a serial data stream periodically to identify delineation between data units. Receiving device searches for the marker in the serial data stream and, if finding it, uses it to declare data unit delineation and identify the boundaries of data units in the stream. In the system and method of the embodiment, data units are cells and data parts are bytes.

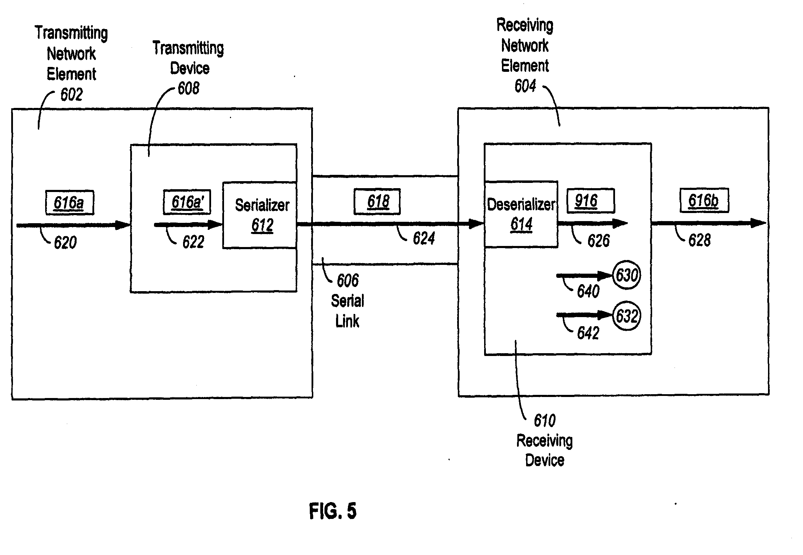

Referring to Figure 5, a transmitting communication element 602 and a receiving communication element 604 of an embodiment are illustrated. Transmitting communication element 602 is coupled to receiving communication element 604 by serial link 606. Transmitting device 602 includes transmitting device 608 and receiving communication element 604 includes receiving device 610. Transmitting device includes serializer 612. Receiving device includes deserializer 614, marker counter 630 and non-marker counter 632. A deserializer converts a stream of data elements received in time sequence into a data stream of elements transmitted simultaneously. In the embodiment, deserializer 614 is a device such as the TLK1201 SERDES device commercially available from Texas Instruments Incorporated of Dallas, Texas, U.S.A. Data from parallel data stream 616a enters transmitting device 608. Data from receiving device 610 exits in parallel data stream 616b. Transmitting communication element 602 transmits data to receiving communication element 604 over serial link 606 in serial data stream 618.

In a method of the embodiment, transmitting device 608 receives parallel data stream 616a, indicated by arrow 620. Parallel data stream 616a entering transmitting device 608 of the embodiment is similar to parallel data stream 116a of the prior art. Transmitting device 608 inserts synchronization markers into parallel data stream 116a to form parallel data stream 616a'. While synchronization markers may be inserted at any point prior to serial data stream 618 being transmitted from transmitting communication element 602, they are preferably inserted by transmitting device 608 prior to serialization of the parallel data and transmission to receiving communication element 604.

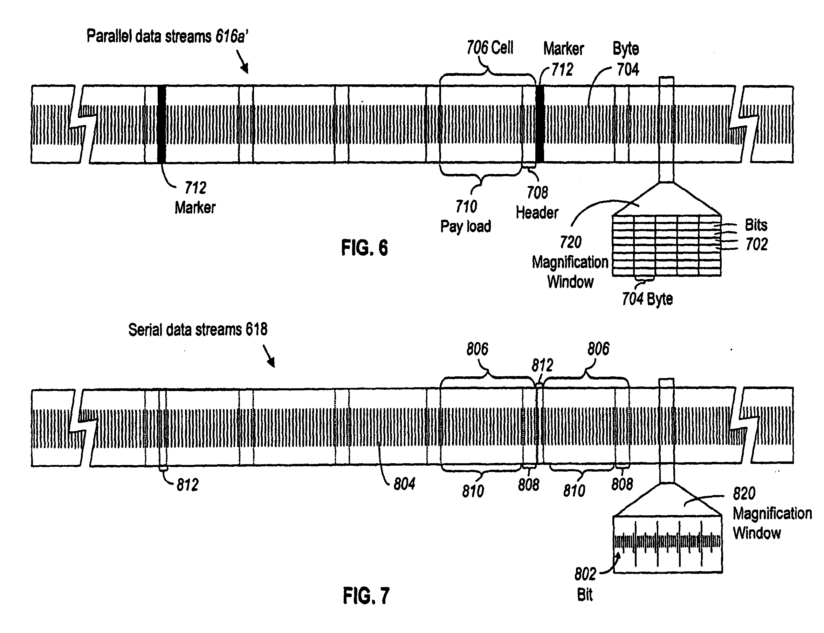

Referring to Figure 6, parallel data stream 616a' of the embodiment is illustrated in greater detail. A fixed number of bits 702, shown in magnification window 720, form each byte 704 encoded in parallel data stream 616a'. Each cell 706 encoded in parallel data stream 616a' comprises 53 bytes 704, of which five bytes 704 comprise header 708 and 48 bytes 704 comprise payload 710. Parallel data stream 616a' also comprises synchronization markers 712. In the embodiment, each marker 712 comprises at least one byte 704. Transmitting device 608 inserts marker 712 in parallel data stream 616a' between sets of N cells 706.

It will be appreciated that in other embodiments transmitting device 608 may insert markers 712 between sets of a fixed number of bytes 704, not necessarily corresponding to the boundaries between cells 706. In such a case, receiving communication element 604 predicts the location of the beginning of a next cell 706 once it detects marker 712 to achieve cell delineation.

Transmitting device 608 then sends parallel data stream 616a' to serializer 612 for serialization, indicated by arrow 622, prior to transmission from transmitting device 608. Serializer 612 generates serial data stream 618 from parallel data stream 616a' and transmitting communication element 602 transmits serial data stream 618 over serial link 606 to receiving communication element 604, indicated by arrow 624.

When serializer 612 generates serial data stream 618, it also encodes the data using 8b/10b encoding. This encoding provides error detecting capabilities for the data transmitted over serial link 606. The particulars of 8b/10b encoding are provided later.

Referring to Figure 7, serial data stream 618 of the embodiment is illustrated in greater detail. Serial data stream 618 comprises bits 802, shown in magnification window 820. Brackets 804 indicate the position of individual bytes 704 in serial data stream 618. Similarly, brackets 806 indicate cells 706, brackets 808 indicate headers 708, brackets 810 indicate payloads 710 and brackets 812 indicate markers 712. Although the positions of bytes 704, cells 706, headers 708, payloads 710 and markers 712 are indicated in serial data stream 618 in Figure 7, serial data stream 618 does not indicate boundaries between these elements and appears as a stream of bits 802.

Receiving communication element 604 receives serial data stream 618 and routes the serial data to receiving device 610. Receiving device 610 reads data bit-by-bit from serial data stream 618 and routes it to deserializer 614. Prior to receiving device 610 delineating cells 706, deserializer 614 deserializes the serial data into parallel data and aligns serial data stream 618 into bytes 704. Aligning serial data stream 618 into bytes 704 is described later. Byte-aligned parallel data stream 916 exits deserializer 614, indicated by arrow 626.

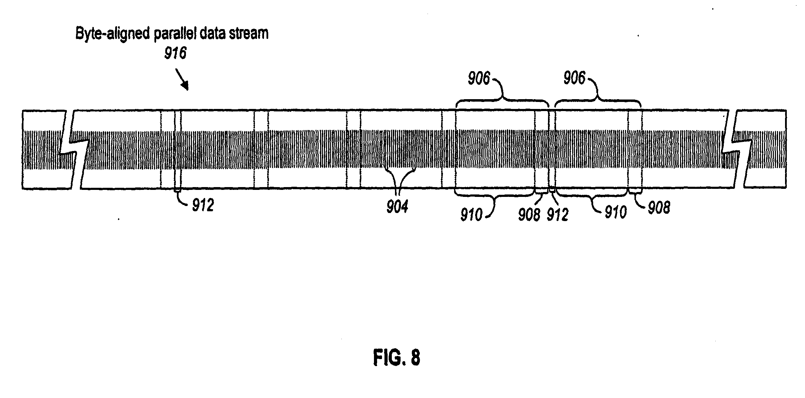

Referring to Figure 8, the byte-aligned parallel data stream 916 resulting from aligning serial data stream 618 into bytes 704 is illustrated. Byte-aligned parallel data stream 916 comprises bytes 704. Brackets 904 indicate boundaries of individual bytes 704 in byte-aligned parallel data stream 916. Similarly, brackets 906 indicate cells 706, brackets 908 indicate boundaries of headers 708, brackets 910 indicate boundaries of payloads 710 and brackets 912 indicate boundaries of markers 712 in byte-aligned parallel data stream 916. Although the positions of cells 706, headers 708, payloads 710 and markers 712 are indicated in byte-aligned parallel data stream 916 in Figure 8, receiving device 610 has not yet identified markers 712 and determined the boundaries between cells 706 in byte-aligned parallel data stream 916.

In the method of the embodiment, receiving device 610 reads bytes 704 from byte-aligned parallel data stream 916 exiting deserializer 614, searching for marker 712. Upon detecting marker 712, receiving device 610 may immediately declare cell delineation. Receiving device 610 aligns byte-aligned parallel data stream 916 so that the first byte 704 after marker 712 is the beginning of the next cell 706. As stated previously, in other embodiments which insert markers 712 between a fixed number of bytes 704, receiving device 610 aligns byte-aligned parallel data stream 916 to the expected location for the beginning of the next cell 706. Receiving communication element 604 causes deserializer 614 to lock its byte alignment and continue to deserialize data into bytes 704 according to the byte alignment achieved. This prevents deserializer 614 from changing the alignment of bytes 706 in byte-aligned parallel data stream 916. Receiving device 610 removes markers 712 from byte-aligned parallel data stream 916 and aligns the data into parallel data stream 616b. Receiving device 610 sends parallel data stream 616b into receiving communication element 604, indicated by arrow 628, which processes the data contained.

Although the embodiment is described as byte aligning the data into byte-aligned parallel data stream 916 before attempting to declare cell delineation, receiving device 610 searches for marker 712 in the data received even though the data stream may not yet have byte alignment. It is unlikely, however, for receiving device 610 to achieve cell delineation on data that has not been aligned into bytes 704.

However, in order to provide a higher degree of reliability in detecting a "true" marker 712, in the embodiment, receiving device 610 preferably does not immediately declare cell delineation after detecting a first marker 712 and requires that a series of markers 712 be detected based on the location of the detected marker 712. As such, after detection of a first marker 712, receiving device 610 increments the value of marker counter 630, indicated by arrow 640, to record that a marker 712 was found. Receiving device 610 then scans byte-aligned parallel data stream 916 at a location N cell lengths after the identified marker 712. The number of cell lengths N corresponds to the number of cells 706 which separate markers 712 when they were inserted in parallel data stream 616a. Referring to Figures 7, 8 and 9, four cells 706 separate markers 712 in the embodiment described. It will be appreciated that N may be any number but it must correlate to the distance at which markers 712 are inserted in serial data stream 618. As stated previously, in other embodiments which insert markers 712 between a fixed number of bytes 704, receiving device 610 scans byte-aligned parallel data stream 916 at a distance correlating to the distance at which markers 712 are inserted. When a first marker 712 is found, receiving device 610 preferably does not search byte-aligned parallel data stream 916 at any location before the next marker 712 is expected.

Receiving device 610 scans byte-aligned parallel data stream 916 and after the equivalent of N bytes 904 have passed, receiving device 610 determines whether a marker 712 exists at the expected location. If marker 712 exists at the expected location, receiving device 610 increments the value of marker counter 630. Receiving device 610 continues in this manner, scanning for marker 712 at a next expected location and incrementing the value of marker counter 630 when marker 712 is found. When the value in marker counter 630 reaches a marker threshold, receiving device 610 declares cell delineation.

When receiving device 610 declares cell delineation, receiving device 610 aligns byte-aligned parallel data stream 916 so that the first byte 704 after the last marker 712 is the beginning of the next cell 706. As stated previously, in other embodiments which insert markers 712 between a fixed number of bytes 704, receiving device 610 aligns byte-aligned parallel data stream 916 to the expected location for the beginning of the next cell 706. Receiving communication element 604 causes deserializer 614 to lock its byte alignment. Receiving device 610 removes markers 712 from byte-aligned parallel data stream 916 and aligns the data into parallel data stream 616b. Receiving device 610 sends parallel data stream 616b into receiving communication element 604, indicated by arrow 628, which processes the data contained.

Prior to the value of marker counter 630 reaching the marker threshold, receiving device 610 may determine that marker 712 was not found at the location searched in byte-aligned parallel data stream 916. In such a case, receiving device 610 resets the value of marker counter 630 and begins searching byte-aligned parallel data stream 916 again byte-by-byte for marker 712.

It will be appreciated that the marker threshold for the value of marker counter 630 to reach before declaring cell delineation may be different for different implementations. In the embodiment, the marker threshold is three (3), i.e. cell delineation is declared after receiving device 610 finds a first marker 712 followed by two consecutive markers 712 in the correct locations. It will also be appreciated that, in other embodiments, receiving device 610 need not increment the value of marker counter 630 for the first instance of marker 712 found.

It will also be appreciated that, in other embodiments, the algorithm may not search byte-aligned parallel data stream 916 for a marker 712 at every expected location for marker 712 but may only search at a subset of expected locations for marker 712. In such embodiments, cell delineation would similarly be declared after receiving device 610 finds a first marker followed by a pre-defined number of markers 712 found at their expected locations in byte-aligned parallel data stream 916.

After declaring cell delineation, receiving device 610 continues to search byte-aligned parallel data stream 916 every N cells 706 or, in other embodiments, every expected location, for marker 712. While receiving device 610 has cell delineation, it continues to remove markers 712 from byte-aligned parallel data stream 916 and receiving communication element 604 processes the resulting parallel data stream 616b. In embodiments where the algorithm does not search at every location in byte-aligned parallel data stream 916 where it expects an instance of marker 712, bytes 704 are removed at these locations to maintain alignment for parallel data stream 616b.

Note that the algorithm for assessing and marking counters is flexible. It is possible that within a series of expected locations for a marker 712, one or more markers 712 at one or more of the expected locations may be corrupted, and hence, not detected as a marker 712. This condition does not necessarily signify a misalignment, but only a possibly temporary error in one of the marker bit-patterns. Accordingly, the embodiment will accommodate a number of non-matching bytes at subsequent expected locations for the marker 712 As long as sufficient markers 712 are detected within a maximum span of locations, the embodiment will presume that correct delineation continues once the marker threshold is reached.

If receiving device 610 fails to find a marker 712, it may immediately declare that it has lost cell delineation. Receiving communication element 604 signals deserializer 614 to realign the byte boundary. Deserializer 614 again achieves byte alignment and receiving device 610 begins searching byte-aligned parallel data stream 916 byte-by-byte.

However, in order to provide a higher degree of reliability in detecting a "true" loss of cell delineation, in the embodiment, receiving device 610 preferably does not immediately declare loss of cell delineation after failing to detect a first marker 712 and instead waits for a series of failures to detect markers 712. As such, after a failure to detect a first marker 712, receiving device 610 increments the value of non-marker counter 632, indicated by arrow 642, to record a failure to find a marker 712. Receiving communication element 604 continues to remove byte(s) 704 where marker 712 was expected but not found. This allows receiving communication element 604 to maintain cell delineation when receiving communication element 604 does not find marker 712 if a bit-error has appeared in marker 712. Receiving communication element 604 then continues to search byte-aligned parallel data stream 916 every N cells 706 for marker 712.

Receiving device 610 increments the value of non-marker counter 632 for each consecutive failure to find marker 712. When the value of non-marker counter 632 reaches a non-marker threshold of failures to find a marker 712, receiving device 610 declares loss of cell delineation. Receiving communication element 604 signals deserializer 614 to realign the byte boundary. Deserializer 614 again achieves byte alignment while receiving device 610 begins searching byte-aligned parallel data stream 916 byte-by-byte as described above.

Prior to the value of non-marker counter 632 reaching the non-marker threshold, receiving device 610 may find a marker 712 at a correct location. In such a case, receiving device 610 resets the value of non-marker counter 632 and continues to search byte-aligned parallel data stream 916 every N cells 706 for marker 712. Receiving device 610 does not declare loss of byte alignment. As with the marker threshold to declare cell delineation, different implementations may use different non-marker thresholds for the non-marker counter 632. In the embodiment, the non-marker threshold is three (3) i.e. cell delineation is declared after receiving device 610 fails to find three consecutive markers 712 in the correct locations.

In the embodiment, serial link 606 is an optical serial link 606. As is known in the art for optical links, transmitting device 608 encodes the eight-bit bytes of parallel data link 616a into ten-bit characters using 8b/10b encoding. IEEE standard 802.3, 2000 edition for CSMA/CD (Ethernet) provides an overview of 8b/10b encoding with is herein incorporated by reference. Briefly, typical 8b/10b encoding provides an equal number of 0s and 1s in binary serial data stream 618 with a maximum run of five consecutive 0s or 1s. The 8b/10b encoding provides a number of benefits including providing enough transitions to recover the clock and error detecting capabilities. Individual encoded bytes are one of three types: neutral, positive and negative. A neutral byte has an equal number of 0s and 1s. A positive byte has four 0s and six 1s. A negative byte has six 0s and four 1s. To maintain an overall balanced serial data stream 618, transmitting device 608 tracks the difference between 0s and 1s inserted in serial data stream 618 and uses the difference, or running disparity, as an input to its encoding function to encode the next individual byte.

When serial data stream 618 has a negative running disparity, i.e. more 0s than 1s have been inserted, the next encoded byte must be neutral or positive. When serial data stream 618 has a positive running disparity, i.e. more 1s than 0s have been inserted, the next encoded byte must be neutral or negative. Accordingly, eight-bit bytes can be encoded into one of two valid ten-bit characters, a positive and a negative, to balance the running disparity of serial data stream 618. A serial data stream 618 is commonly initialized having a negative running disparity. Insertion of a positive byte changes the running disparity to positive. Insertion of a neutral byte leaves the running disparity of the stream unchanged. The running disparity of serial data stream 618 is always either positive or negative.

The encoding scheme also provides control characters to transmit control messages in serial data stream 618. These control characters are commonly referred to as "K" characters. Some K characters have comma properties so that when a parallel data stream 616 is encoded, K characters with comma properties will not occur in the resulting serial data stream 618, even across boundaries of encoded bytes. K characters with comma properties must be specifically inserted in serial data stream 618. As a result, receiving communication element 604 recognizes K characters with comma properties as control characters and can act accordingly.

As K characters with comma properties do not appear in serial data stream 618 unless inserted, the embodiment uses one or more K characters with comma properties for marker 712. Using K characters with comma properties reduces the likelihood of receiving de vice 610 finding marker 712 in serial data stream 618 other than where marker 712 has been inserted. An error of at least one bit is necessary for marker 712 to appear other than where it is inserted. In systems where the bit error rate is 10⁻¹², one K character with comma properties is used for marker 712 and an error of one bit in serial data stream 618 will produce marker 712, the chance of finding three consecutive markers 712 where they are not inserted is at most 10⁻³⁶.

It will be appreciated that if the number of K characters with comma properties used in marker 712 is increased, the likelihood that the method of the embodiment will falsely declare cell delineation decreases. However, as markers 712 are continuously inserted in serial data stream 618, the longer the marker 712, the more bandwidth of optical serial link 606 is required for overhead. Also, the more K characters with comma properties used in marker 712, the more likely that an error will occur in marker 712 such that receiving device 610 does not recognize the bytes as marker 712. This may cause a delay in receiving device 610 declaring cell delineation.

Deserializers such as deserializer 614 typically use K characters with comma properties, to achieve byte alignment of serial data stream 618 into ten-bit bytes. Some deserializers search arriving serial data stream 618 bit-by-bit for the 7-bit comma pattern shared by K28.1, K28.5 and K28.7 characters which have comma properties. Other deserializers can only be aligned to one of the two possible encodings for the K28.5 character. Upon finding such a K character, deserializer 614 determines that the next byte begins after the K character. Advantageously, by using the same character for deserializer alignment, the generation, insertion and processing of markers 712 is simplified.

It will be appreciated that, in other embodiments, a marker 712 may include a K character with comma properties along with other K characters and provide the same advantages.

The embodiment uses two K28.5 characters as marker 712. This allows the embodiment to reuse the K28.5 characters deserializer 614 uses for byte alignment. Using two K28.5 characters is favourable to aid deserializer 614 in byte alignment. K28.5 characters may be positive or negative. The ten-bit binary representation of K28.5 inserted when the running disparity negative is "0011111010". When the running disparity is positive, the ten-bit binary representation of K28.5 inserted is "1100000101". As stated previously some deserializers 614 can only achieve byte alignment using one form of the K28.5 character, while others can only achieve byte alignment using the other form of the K28.5 character. The use of two K28.5 characters for marker 712 of the embodiment allows for the insertion of both forms. This ensures that deserializer 614 can achieve byte alignment with a single marker.

Additionally, it is fairly simple to insert both a positive and a negative K28.5 character as marker 712 using a running disparity function once it is determined that a marker 712 is to be inserted. When the device inserting marker 712, such as transmitting device 608, prepares to insert marker 712, it uses the running disparity function on serial data stream 618 to determine whether a positive or a negative K28.5 character is to be inserted. If serial data stream 618 has a negative running disparity, transmitting device 608 inserts a positive K28.5 character. Transmitting device 608 then uses the running disparity function again to choose another K28.5 character to insert. The running disparity function then determines that the next K28.5 character to insert is a negative K28.5 character. If serial data stream 618 has a positive running disparity when marker 712 is to be inserted, the running disparity function causes transmitting device 608 to insert a negative K28.5 character, followed by a positive K28.5 character.

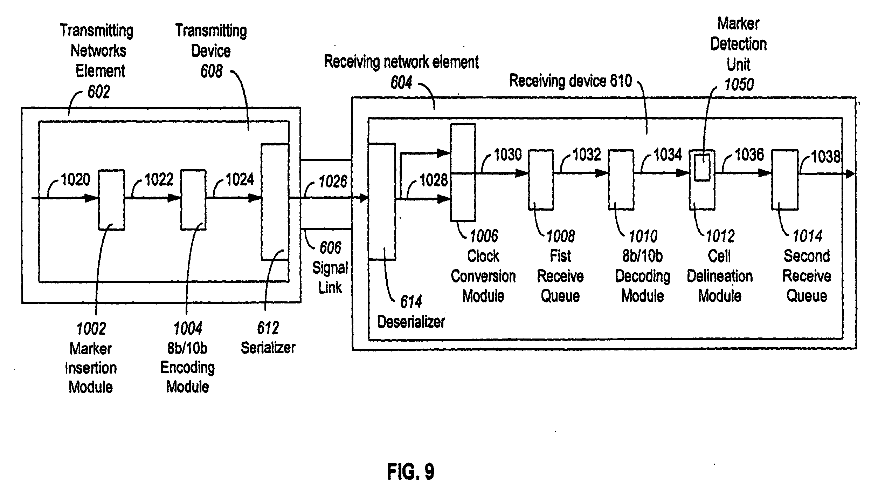

Referring to Figure 9, transmitting device 608 in transmitting communication element 602 and receiving device 610 in receiving communication element 604 are illustrated in greater detail. Transmitting device 608 has marker insertion module 1002 and 8b/10b encoding module 1004 as well as serializer 612. Receiving device has clock conversion module 1006, first receive queue 1008, 8b/10b decoding module 1010, cell delineation module 1012 and second receive queue 1014 as well as deserializer 614. Cell delineation module 1012 includes a marker detection unit 1050. It will be appreciated, in a two-way transmission system, both transmitting communication element 602 and receiving communication element 604 have a transmitting device 608 and a receiving device 610. However, only one transmission direction is shown in Figure 9 for simplicity.

As with Figure 5, parallel data stream 616a enters transmission device 608. Parallel data stream 616a is provided to marker insertion module 1002, indicated by arrow 1020. Marker insertion module 1002, as described previously, inserts marker 712 every N cells 706 in parallel data stream 616a resulting in parallel data stream 616a'. As stated previously, in other embodiments, marker insertion module 1002 may insert marker 712 between sets of bytes 704 not necessarily at boundaries between cells 706. Transmission device 608 then provides parallel data stream 616a' to 8b/10b encoding module 1004, indicated by arrow 1022. 8b/10b encoding module 1004 encodes the eight-bit bytes 704 of parallel data stream 616a' into ten-bit characters, as is known in the art, for transmission over optical serial link 606. Transmission device 608 finally provides encoded parallel data stream 616a' to serializer 612, indicated by arrow 1024, which converts encoded parallel data stream 616a' into serial data stream 618. Transmitting communication element 602 then transmits serial data stream 618 over serial link 606 to receiving communication element 604, indicated by arrow 1026.

Receiving communication element 604 receives serial data stream 618 and routes it to deserializer 614 in receiving device 610. Deserializer 614 deserializes serial data stream 618 and converts it to byte-aligned parallel data stream 916, as described previously. Receiving device 610 then provides byte-aligned parallel data stream 916 to clock conversion module 1006, indicated by arrow 1028. It will be appreciated that while data is not byte aligned into byte-aligned parallel data stream 916, receiving device 610 still provides the date to its components after deserializer 614 but, as stated earlier, it is unlikely that such components will declare cell delineation on data that is not byte aligned. Clock conversion module 1006 converts the ten bits of data arriving simultaneously on the data line between deserializer 614 and clock conversion module 1006 into 20 bits of data simultaneously leaving on the data line from clock conversion module 1006. This allows the data lines within receiving device 610 to be clocked at a slower rate than serial link 606. Clock conversion module 1006 accumulates the 20 bits of data in two parallel ten-bit characters in first receive queue 1008, indicated by arrow 1030.

Receiving device 610 provides the parallel ten-bit characters accumulated in first receive queue 1008 to 8b/10b decoding module 1010, indicated by arrow 1032. 8b/10b decoding module 1010 decodes the ten-bit characters of byte-aligned parallel data stream 916 into eight-bit bytes 704, as is known in the art. As with decoding encoded user data, 8b/10b decoding module 1010 decodes each ten-bit K28.5 character that comprises marker 712 with indication of the K character detected. The K28.5 character may be decoded to a &bit representation or to a 4-bit representation to simplify the logic of the system. It will be appreciated that the K28.5 character may be decoded using other methods known in the art that identify that a K character with comma properties was detected. The decoded parallel data is provided to cell delineation module 1012, indicated by arrow 1034.

Cell delineation module 1012 carries out the algorithm detailed above for declaring cell delineation and for declaring loss of cell delineation. Marker detection unit 1015 searches for and detects instances of markers 712. Once declaring cell delineation and aligning byte-aligned serial data stream 916, cell delineation module 1012 provides aligned user data to second receive queue 1014, indicated by arrow 1036. Receiving device 610 sends cells 706 accumulated in second receive queue 1014, indicated by arrow 1028, to other components of receiving communication element 604 for processing.

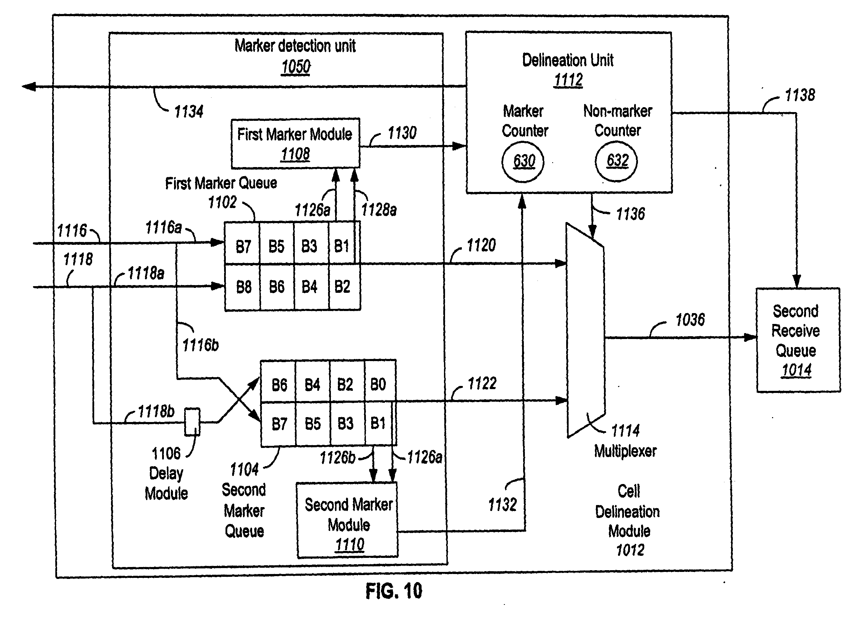

Referring to Figure 10, cell delineation module 1012 is illustrated in greater detail. Cell delineation module 1012 comprises data lines 1116 and 1118 connected to first marker queue 1102 and second marker queue 1104. Delay module 1106 acts on a portion of data line 1118. First marker queue 1102 communicates with first marker module 1108. Second marker queue 1104 communicates with second marker module 1110. Delineation unit 1112 communicates with first marker module 1108, second marker module 1110 and multiplexer 1114. Delineation unit 1112 includes marker counter 630 and non-marker counter 632. Marker detection unit 1050 includes first marker queue 1102, second marker queue 1104, delay module 1106, first marker module 1108 and second marker module 1110.

As described previously, clock conversion module 1006 converts the ten bits of data arriving simultaneously at clock conversion module 1006 into 20 bits of data simultaneously leaving on the data line from clock conversion module 1006. The 20 bits of data leave clock conversion module 1006 on two separate data lines, each line carrying ten bits of data. 8b/10b decoding module converts the data on the two data lines into eight-bit bytes. Data then arrives at cell delineation module 1012 on two separate data lines 1116 and 1118, each line carrying eight bits of data. Bytes arriving at cell delineation module 1012 are indicated in Figure 10, in order, as B1, B2, B3, B4, B5 and B6 and so on. As can be seen, data lines 1116 and 1118 carry every second byte, data line 1116 carrying bytes B1, B3 and B5 and so on and data line 1118 carrying bytes B2, B4 and B6 and so on.

Cell delineation module 1012 uses the following described structure since the embodiment uses a marker 712 two bytes long. It will be appreciated that other structures can be used to search byte-aligned parallel data stream 916 for marker 712.

Cell delineation module 1012 splits data line 1116 into branches 1116a and 1116b and splits data line 1118 into branches 1118a and 1118b. Branches 1116a and 1118a are routed to first marker queue 1102. Branches 1116b and 1118b are routed to second marker queue 1104. As can be seen, bytes B1 and B2 arrive simultaneously at first marker queue 1102 from branches 1116a and 1118a. Similarly, bytes B3 and B4 and also B5 and B6 arrive simultaneously at first marker queue 1102 from branches 1116a and 1118a. Regarding branches 1116b and 1118b, delay module 1106 delays data in branch 1118b by one byte. Also, branch 1118b is routed to the first row of second marker que ue 1104 and branch 1116b is routed to the second row of second marker queue 1104. This causes bytes B0 (the byte before B2 on branch 1118b) and B1 to arrive simultaneously at second marker queue 1104 from branches 1116b and 1118b. Similarly, bytes B2 and B3 and also B4 and B5 arrive simultaneously at first marker queue 1102 from branches 1116b and 1118b. This allows cell delineation module 1112 to fmd marker 712 if the data stream is aligned with the first byte of marker 712 in data line 1116 or aligned with the first byte of marker 712 in data line 1118.

For each pair of bytes arriving in the two rows of first marker queue 1102, first marker module 1108 compares the pair of bytes to marker 712. In the embodiment, first marker module 1108 compares the pair of bytes to two K28.5 characters used for marker 712. Simultaneous with first marker module 1108 performing this comparison, second marker module 1110 compares the pair of bytes that arrived in its two rows to marker 712. For example, first marker module 1108 compares B1 and B2 with marker 712 while second marker module 1110 compares B0 and B1 with marker 712.

Both first data queue 1102 and second data queue 1104 send data to multiplexer 1114, indicated by arrows 1120 and 1122 respectively. Prior to declaring cell delineation, delineation unit 1112 signals multiplexer 1114 to discard this data. Delineation unit 1112 communicates with both first marker module 1108 and second marker module 1110, indicated by arrows 1130 and 1132 respectively, to determine if cell delineation has been achieved. When cell delineation module 1012 is searching byte-by-byte for the first instance of marker 712, delineation unit 1112 signals first marker module 1108 and second marker module 1110 to search for marker 712 in each pair of bytes received. Once either first marker module 1108 or second marker module 1110 find marker 712, delineation unit 1112 increments marker counter 630, as described previously, and searches again in the same queue for the next expected marker 712, i.e. 212 bytes after marker 712 is found.

Delineation unit 1112 continues to monitor the detection of markers 712 according to the algorithm detailed above until declaring cell delineation. Once delineation unit 1112 declares that cell delineation is achieved, if first marker module 1108 has found marker(s) 712, delineation unit 1112 determines that first data queue 1102 is aligned correctly, i.e. the first byte of the cells in the data stream appears in the first row of first data queue 1102. Delineation unit 1112 signals deserializer 614, indicated by arrow 1134, to lock its byte alignment. Delineation unit 1112 also signals multiplexer 1114, indicated by arrow 1136, to route data from first data queue 1102 to second receive queue 1014, indicated by arrow 1036. Delineation unit 1112 signals second receive queue 1014, indicated by arrow 1138, to enable multiplexer 1114 to write data to second receive queue 1014. Markers 712 are not written to second receive queue 1014.

If delineation unit 1112 determines that second data queue 1104 is aligned correctly, delineation unit 1112 signals multiplexer 1114, indicated by arrow 1136, to route data from second data queue 1104 to second receive queue 1014, indicated by arrow 1036. Delineation unit 1112 also signals second receive queue 1014, indicated by arrow 1136, to enable multiplexer 1114 to write data to second receive queue 1014 and signals deserializer 614, indicated by arrow 1134, to lock byte alignment. Markers 712 are not written to second receive queue 1014.

Delineation unit 1112 continues to monitor the detection of markers 712 according to the algorithm detailed above after declaring cell delineation. If the first marker module 1108 or second marker module 1110 determines that an expected marker 712 was not found, it signals this to delineation unit 1112. Delineation unit 1112 increments non-marker counter 632, as described previously. If non-marker counter 632 reaches the non-marker threshold so that delineation unit 1112 determines that cell de lineation has been lost, it signals deserializer 614, indicated by arrow 1134, to realign the byte boundary. Delineation unit 1112 signals second receive queue 1014, indicated by arrow 1138, to disable multiplexer 1114 from writing data to second receive queue 1014.

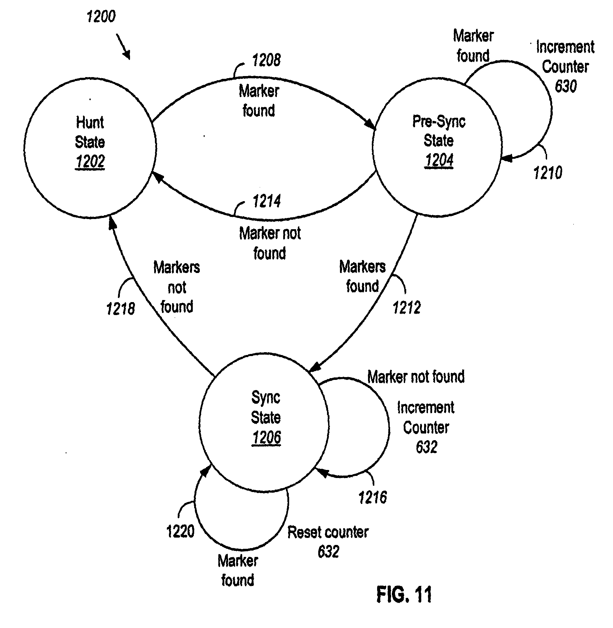

Delineation unit 1112 uses a cell delineation state machine to implement the algorithm described above. Referring to Figure 11, the state diagram of cell delineation state machine 1200 is illustrated. Cell delineation state machine 1200 has three states: hunt state 1202, pre-synchronization or pre-sync state 1204 and synchronization or sync state 1206.

Cell delineation state machine 1200 is in hunt state 1202 when cell delineation unit 1012 is searching byte-by-byte for marker 712. When delineation unit 1112 determines that marker 712 was found, it moves cell delineation state machine 1200 to pre-sync state 1204, indicated by arrow 1208. In pre-sync state 1204, delineation unit 1112 continues to signal first marker module 1108 or second marker module 1110 to search for marker 712 in the expected location for marker 712. For each marker 712 found in the correct location, delineation unit 1112 increments marker counter 630, indicated by arrow 1210. When delineation unit 1112 determines that the set threshold of markers 712 in the data stream at the correct locations is reached, it moves cell delineation state machine 1200 to sync state 1206, indicated by arrow 1212.

If delineation unit 1112 determines that an expected marker 712 was not found before marker counter 630 reached the set threshold of markers 712 found, it moves cell delineation state machine 1200 back to hunt state 1202, indicated by arrow 1214. Delineation unit 1112 also resets marker counter 630.

At sync state 1206, delineation unit 1112 continues to monitor the detection of markers 712 after declaring cell delineation. If the first marker module 1108 or second marker module 1110 determines that an expected marker 712 was not found, it signals this to delineation unit 1112. Delineation unit 1112 increments non-marker counter 632, indicated by arrow 1216, but remains in sync state 1206. If non-marker counter 632 reaches the non-marker threshold so that delineation unit 1112 determines that cell delineation has been lost, delineation unit 1112 moves cell delineation state machine 1200 back to hunt state 1202, indicated by arrow 1218. Delineation unit 1112 can reset marker counter 632 when it moves cell delineation state machine 1200 from pre-sync state 1204 to sync state 1206 or when it moves it from sync state 1206 back to hunt state 1202. If, prior to non-marker counter 632 reaching the non-marker threshold, the first marker module 1108 or second marker module 1110 determines that an expected marker 712 was found in the correct location, it signals this to delineation unit 1112. Cell delineation state machine 1200 remains in sync state 1206 and delineation unit resets non-marker counter 632, indicated by arrow 1220.

Although the system and method of the embodiment are described in relation to cells, it will be appreciated that the method is applicable to any fixed length data unit.

It is noted that those skilled in the art will appreciate that various modifications of detail may be made to the present embodiment, all of which would come within the scope of the invention.

## Claims

1. A method of detecting delineation of data units found in a stream of data parts, each data unit of said stream of data parts having a fixed number of data parts, said stream of data parts having an instance of a marker inserted therein periodically, each said instance of said marker inserted between consecutive sets of at least one data part, each set of said sets having a fixed number of said at least one data part, said method comprising the steps of:
(a) detecting a first instance of said marker in said stream;
(b) searching for another instance of said marker at an expected location in said stream; and
(c) based on whether said another instance of said marker is detected at said expected location, declaring a delineation state for said data units, said delineation state indicating whether boundaries between said data units in said stream are detected.

2. The method of detecting delineation of data units as claimed in claim 1, wherein said another instance of said marker is sought at a next expected location of said marker and each said instance of said marker is inserted at a boundary between two of said data units.

3. The method of detecting delineation of data units as claimed in claim 2, wherein said marker, absent an error in said stream, does not occur in said stream of data parts except where inserted.

4. The method of detecting delineation of data units as claimed in claim 3, said method further comprising iteratively repeating said step (b), searching further downstream in said stream at said next expected location of said marker.

5. The method of detecting delineation of data units as claimed in claim 4, wherein, if said delineation state indicates that said boundaries between said data units have not been detected prior to performing said step (c) and said another instance of said marker has been detected for a first pre-determined number of consecutive iterations of said step (b), said step (c) declares a delineation state indicating that said boundaries of said data units are detected.

6. The method of detecting delineation of data units as claimed in claim 4, wherein, if said delineation state indicates that said boundaries between said data units have been detected prior to performing said step (c) and said another instance of said marker has not been detected for a second pre-determined number of consecutive iterations of said step (b), said step (c) declares a delineation state indicating that said boundaries of said data units are not detected.

7. The method of detecting delineation of data units as claimed in claim 6, wherein said data units are cells and said data parts are bytes.

8. The method of detecting delineation of data units as claimed in claim 5, wherein said data units are cells and said data parts are bytes.

9. The method of detecting delineation of data units as claimed in claim 8, wherein said bytes of said stream are encoded as 10-bit characters using 8b/10b encoding prior to transmission of said stream.

10. The method of detecting delineation of data units as claimed in claim 9, wherein said marker comprises a control character with comma properties.

11. The method of detecting delineation of data units as claimed in claim 10, wherein said stream is transmitted as a serial stream of bits, said stream of encoded bytes is a parallel stream of encoded bytes and said method further comprising the step of:
(a1) aligning said serial stream of bits into said parallel stream of encoded bytes using said control character with comma properties prior to said step (a).

12. The method of detecting delineation of data units as claimed in claim 11, wherein said control character with comma properties is a K28.5 control character.

13. The method of detecting delineation of data units as claimed in claim 12, wherein said marker comprises two K28.5 control characters.

14. The method of detecting delineation of data units as claimed in claim 13, said method further comprising the step of:
(a2) decoding said parallel stream of encoded bytes into a stream of decoded 8-bit bytes prior to said step (a) and following said step (a1) and, upon detection of a control character in said parallel stream of encoded bytes, indicating location of said control character in said stream of decoded bytes.

15. The method of detecting delineation of data units as claimed in claim 14, wherein said step (a2) indicates in said stream of decoded bytes identity of said control character detected.

16. The method of detecting delineation of data units as claimed in claim 15, wherein said each set of said at least one byte comprises four cells.

17. The method of detecting delineation of data units as claimed in claim 16, wherein said first pre-defined number is three.

18. The method of detecting delineation of data units as claimed in claim 7, wherein said second pre-defined number is three.

19. A device for detecting delineation of data units found in a stream of data parts, each data unit of said stream of data parts having a fixed number of data parts, said stream of data parts having an instance of a marker inserted therein periodically, each said instance of said marker inserted between consecutive sets of at least one data part, each set of said sets having a fixed number of said at least one data part, said device comprising:
a marker detection unit searching for a first instance of said marker in said stream and searching for another instance of said marker at an expected location in said stream; and
a delineation unit communicating with said marker detection unit, said delineation unit declaring a delineation state for said data units based on whether said marker detection unit detects said another instance of said marker at said expected location, said delineation state indicating whether boundaries between said data units in said stream are detected.

20. The device for detecting delineation of data units as claimed in claim 19, wherein said marker detection unit searches for said another instance of said marker at a next expected location of said marker and each said instance of said marker is inserted at a boundary between two of said data units.

21. The device for detecting delineation of data units as claimed in claim 20, wherein said marker detection unit iteratively searches further downstream in said stream for said another instance of said marker at said next expected location of said marker.

22. The device for detecting delineation of data units as claimed in claim 21, said device further comprising a marker counter wherein said delineation unit increments a value of said marker counter upon said marker detection unit detecting said another instance of said marker at said next expected location, said delineation unit declaring a delineation state indicating that said boundaries of said data units are detected if said value of said marker counter reaches a first pre-determined value.

23. The device for detecting delineation of data units as claimed in claim 22, said device further comprising a non-marker counter wherein said delineation unit increments a value of said non-marker counter upon said marker detection unit failing to detect said another instance of said marker at said next expected location, said delineation unit declaring a delineation state indicating that said boundaries of said data units are not detected if said value of said non-marker counter reaches a second pre-determined value.

24. The device for detecting delineation of data units as claimed in claim 23, wherein said data units are cells and said data parts are bytes.

25. The device for detecting delineation of data units as claimed in claim 24, wherein said stream is transmitted as a serial stream of bits, said stream of encoded bytes is a parallel stream of encoded bytes and said device further comprises a deserializer aligning said serial stream of bits into said parallel stream of encoded bytes using said marker.

26. The device for detecting delineation of data units as claimed in claim 25, wherein said bytes of said stream are encoded as 10-bit characters using 8b/10b encoding prior to transmission of said stream and said device further comprising an 8b/10b decoder decoding said parallel stream of encoded bytes into a stream of decoded 8-bit bytes.

27. The device for detecting delineation of data units as claimed in claim 26, wherein said marker comprises at least one K28.5 control character.

28. A method of detecting delineation of cells found in a stream of bytes, each cell of said stream of bytes having a fixed number of bytes, said stream of bytes having an instance of a marker of at least one byte inserted therein periodically, said method comprising the steps of:
(a) detecting an instance of said marker in said stream; and
(b) based on whether said instance of said marker is detected at an expected location in said stream, declaring a delineation state for said cells, said delineation state indicating whether boundaries between said cells in said stream are detected.

29. The method of detecting delineation of cells as claimed in claim 28, wherein said instances of said marker is inserted at a boundary between two of said cells.

30. The method of detecting delineation of cells as claimed in claim 29, wherein said instance of said marker, absent an error in said stream, does not occur in said stream of data parts except where inserted.

31. The method of detecting delineation of cells as claimed in claim 30, said method further comprising iteratively repeating said step (a) and wherein said step (b) declares said delineation state for said cells based on whether said instances of said marker sought in repetitions of said step (a) are detected at their respective expected locations in said stream.

32. The method of detecting delineation of cells as claimed in claim 31, wherein, if said delineation state indicates that said boundaries between said cells have not been detected prior to performing said step (b) and said instances of said marker have been detected for a first pre-determined number of consecutive iterations of said step (a), said step (b) declares a delineation state indicating that said boundaries of said cells are detected.

33. The method of detecting delineation of cells as claimed in claim 31, wherein, if said delineation state indicates that said boundaries between said cells have been detected prior to performing said step (b) and said instances of said marker have not been detected for a second pre-determined number of consecutive iterations of said step (a), said step (b) declares a delineation state indicating that said boundaries of said cells are not detected.

34. A data stream for transmission to a network element, said data stream comprising:
a plurality of data parts;
a plurality of data units, each data unit comprising a fixed number of at least one data part of said plurality of data parts; and
a plurality of instances of a marker, each said instance of said marker in said data stream separating two consecutive sets of at least one data part of said plurality of data parts, each said set having a fixed number of said at least one data part;
wherein said plurality of instanc es of said marker are used to declare a delineation state of said data units at said network element, said delineation state indicating whether boundaries between said plurality of data units in said stream are detected at said network element.

35. The data stream as claimed in claim 34, wherein each said instance of said marker is inserted at a boundary between two of said plurality of data units.

36. The data stream as claimed in claim 35, wherein said marker, absent an error in said stream, does not occur in said stream of data parts except where inserted.

37. The data stream as claimed in claim 36, wherein said data units are cells and said data parts are bytes.

38. The data stream as claimed in claim 37, wherein said bytes are encoded as 10-bit characters using 8b/10b encoding.

39. The data stream as claimed in claim 38, wherein said marker comprises a control character with comma properties.

40. The data stream as claimed in claim 39, wherein said control character with comma properties is a K28.5 control character.

41. A method of delineating data units in a stream of data parts, each data unit of said stream of data parts having a fixed number of data parts, said method comprising the steps of:
(a) inserting a first marker in said stream at a boundary between two consecutive data parts of said stream of data parts;
(b) inserting a second marker in said stream following a length of a set of at least one data part, said set having a fixed number of data parts;
said first marker and said second marker used to identify boundaries between said data units.

42. The method of delineating data units as claimed in claim 41, wherein said first marker and said second marker are inserted at a boundary between said data units in said stream of data parts.

43. The method of delineating data units as claimed in claim 42, wherein said marker, absent an error in said stream, does not occur in said stream of data parts except where inserted.

44. The method of delineating data units as claimed in claim 43, wherein said data units are cells and said data parts are 8-bit bytes.

45. The method of delineating data units as claimed in claim 44, said method further comprising the step of:
(c) encoding said stream of 8-bit bytes into a stream of encoded 10-bit characters using 8b/10b encoding after said steps (a) and (b) and prior to transmission of said stream.

46. The method of delineating data units as claimed in claim 45, wherein said marker comprises a control character with comma properties.

47. The method of delineating data units as claimed in claim 46, wherein said control character with comma properties is a K28.5 control character.
